# EUROPEAN PATENT SPECIFICATION

(11) **EP 2 570 651 B1**
(45) Date of publication and mention of the grant of the patent: **02.10.2019**
(21) Application number: 12182586.3
(22) Date of filing: 31.08.2012
(51) Int. Cl.: F02N 11/08, F02D 35/02

(54) **Vehicle control device**
Fahrzeugsteuerungsvorrichtung
Dispositif de contrôle de véhicule

(30) Priority: 16.09.2011 JP 2011202698; 22.08.2012 JP 2012183065
(43) Date of publication of application: 20.03.2013
(73) Proprietor: Mitsubishi Jidosha Kogyo Kabushiki Kaisha, Tokyo 108-8410 (JP)
(72) Inventor: Funakoshi, Hiroshi, Tokyo, 108-8410 (JP)
(74) Representative: Vossius & Partner Patentanwälte Rechtsanwälte mbB

(56) References cited:
- JP-A- 2004 169 578
- JP-A- 2008 014 193
- JP-A- 2008 128 132

## Description

The present invention relates to a vehicle control device performing automatic stop and automatic restart of an internal combustion engine while driving.

In the related art, a vehicle control device has been provided in which mileage and exhaust gas emission are improved by automatically stopping of an internal combustion engine (an engine) if an automatic stop condition is established, when a vehicle stops during driving of an engine. Further, a vehicle control device has been suggested in which mileage and exhaust gas emission are further improved by performing automatic stopping of an engine, when it is determined that an amount a brake is stepped on is greater than a predetermined value during deceleration of a vehicle (see JP-A-2002-221059). However, if the engine automatically stops during deceleration of the vehicle on a road surface having a large upward gradient, since the operation of an oil pressure pump, which is driven by the engine, stops, an oil pressure of an automatic transmission cannot be ensured. Thus, an oil pressure is generated when restarting the engine and a time delay occurs until friction engagement elements of the automatic transmission are engaged and thereby there is concern that rolling backwards of the vehicle may occur. Accordingly, if the gradient of the road surface is large, it is desirable that automatic stopping of the engine be prohibited during deceleration. A technique has been suggested in which automatic stopping of the engine is prohibited if difference between acceleration corresponding to a tilt degree of a vehicle and a real speed is greater than a determination value, if deceleration state of vehicle is detected (see JP-A-2005-207327). In addition, a technique has been suggested in which the detected value of the tilt of the vehicle is corrected based on the acceleration and idle stop is permitted only when the detected tilt value, which is corrected, is in a predetermined range (see JP-A-2005-201107). A further example of the prior art is disclosed in JP-A-2004-169578.

In the related art described above, there is a limit on ensuring precision of a gradient of the road surface detected during deceleration or moving of the vehicle and it is insufficient to precisely perform prohibition of an automatic stopping process of the engine during deceleration, and thereby there is room for improvement in suppressing rolling backwards of the vehicle on a road surface having a gradient. Meanwhile, if the automatic stopping process of the engine is strictly limited during deceleration, a disadvantage occurs in attempting to suppress fuel consumption.

It is an object of the present invention to provide a vehicle control device having an advantage of ensuring frequency of automatic stopping of an engine during deceleration of the vehicle while reliably suppressing rolling backwards of the vehicle even if a road surface has a gradient.

The object above can be achieved by the features defined in the claims.

Particularly, according to one aspect of the invention, there is provided a vehicle control device comprising:
means for controlling automatic stopping, which performs an automatic stopping process of an engine when a stop condition during stopping is established in a stopping state of a vehicle, or when a stop condition during deceleration is established in a decelerating state of the vehicle;
means for controlling automatic restart, which performs an automatic restart process of the engine when a restart condition is established in a state where the engine is in the automatic stopping process;
means for detecting a tilt, which detects a tilt value indicative of a tilt of the vehicle in a longitudinal direction thereof; and
means for forced restarting, which forcibly performs the automatic restart process in a state where the tilt value is greater than a determining tilt value for the decelerating state when the vehicle is in a stopping state or a low speed state just before the stopping state following the performing of the automatic stopping process, in the decelerating state of the vehicle.

The vehicle control may be configured to such that: the stop condition during stopping includes a condition that the tilt value is smaller than or equal to a determining tilt value for the stopping state; and the determining tilt value for the decelerating state is set to a value smaller than the determining tilt value for the stopping state.

According to a first aspect of the invention, if the road surface has a gradient, an automatic stopping process is performed during deceleration under relatively relaxed conditions, however, if a tilt value of the vehicle exceeds a determining tilt value θc for decelerating state in a state where the vehicle is in a stopped state or in a low speed state just before stopping, the restart process is forcibly practiced so that the rolling backwards of the vehicle can be suppressed. Accordingly, there is advantage of ensuring frequency of the automatic stopping of the engine during deceleration of the vehicle while reliably suppressing the rolling backwards of the vehicle even if the road surface has a gradient. In addition, since the automatic stopping process during stopping is performed after the vehicle is stopped, the vehicle stops even though a certain gradient is present, and the rolling backwards of the vehicle hardly occurs even though the engine is automatically stopped. However, since the engine is automatically stopped by the automatic stopping process during deceleration before the vehicle stops, it is unclear whether the stopping of the vehicle can be maintained by the automatic stopping process during deceleration after the vehicle stops.

According to a second aspect of the invention, in the automatic stopping process during deceleration, when the detected tilt value of the vehicle exceeds the tilt value θc determined when decelerating, which is smaller than a determining tilt value θs for stopping state as stop condition during stopping, the engine is forcibly started so that the rolling backwards of the vehicle can be prevented in advance. In addition, since the gradient is hard to be precisely determined during deceleration, a threshold value (the determining tilt value θc for decelerating state) of the compulsory start is small.

The invention is described in detail in conjunction with the drawings, in which:
Fig. 1 is a block diagram illustrating a configuration of a vehicle control device according to a first embodiment of the invention,
Fig. 2 is a first flowchart illustrating the operation of the vehicle control device according to the first embodiment of the invention.
Fig. 3 is a second flowchart illustrating the operation of the vehicle control device according to the first embodiment of the invention,
Fig. 4 is a third flowchart illustrating the operation of the vehicle control device according to the first embodiment of the invention,
Fig. 5 is a fourth flowchart illustrating the operation of the vehicle control device according to the first embodiment of the invention,
Fig. 6 is a fifth flowchart illustrating the operation of the vehicle control device according to the first embodiment of the invention,
Fig. 7 is a sixth flowchart illustrating the operation of the vehicle control device according to the first embodiment of the invention,
Fig. 8 is a seventh flowchart illustrating the operation of the vehicle control device according to the first embodiment of the invention,
Fig. 9 is an eighth flowchart illustrating the operation of the vehicle control device according to the first embodiment of the invention,
Fig. 10 is a ninth flowchart illustrating the operation of the vehicle control device according to the first embodiment of the invention, and
Fig. 11 is a tenth flowchart illustrating the operation of the vehicle control device according to the first embodiment of the invention.

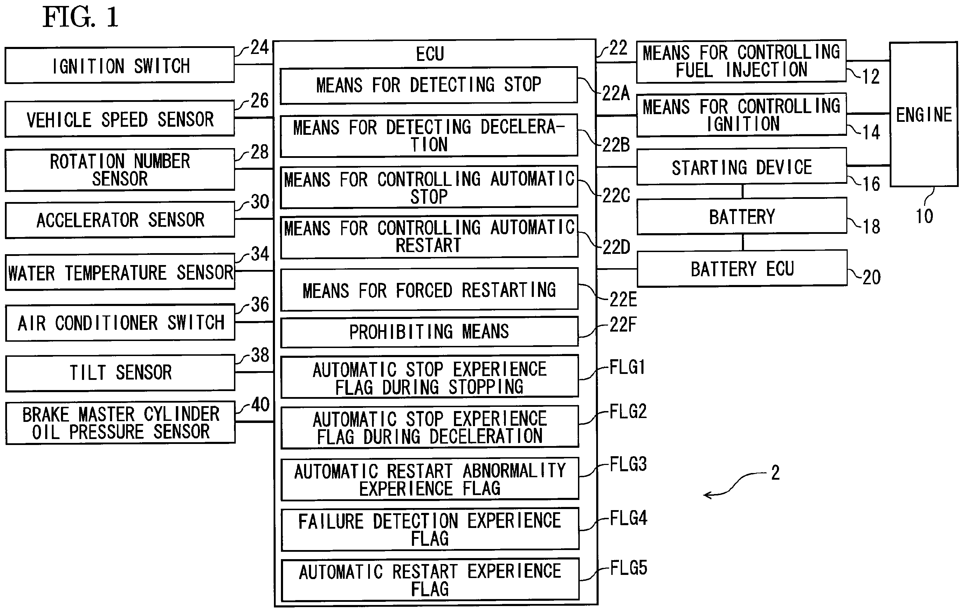

Fig. 1 is a block diagram illustrating a configuration of a vehicle control device 2 according to an embodiment of the invention. A vehicle includes an engine 10 as an engine, means for controlling fuel injection 12, means for controlling ignition 14, a start device 16, a battery 18, a battery ECU 20, various sensors, and an ECU 22 which receives detection signals supplied from various sensors and then controls each portion, including the engine 10. In the embodiment, the vehicle control device 2 is configured including the ECU 22.

The engine 10 drives driving wheels and is configured by a gasoline engine 10 in the embodiment. In addition, a diesel engine may be used as the engine 10. The means for controlling fuel injection 12 performs supply control of the fuel into the engine 10 and is controlled by the ECU 22. The means for controlling ignition 14 performs ignition control of the engine 10 and is controlled by the ECU 22. Furthermore, in the embodiment, the fuel supply is stopped by the means for controlling fuel injection 12 or the ignition is stopped by the means for controlling ignition 14 and thereby the automatic stopping of the engine 10 during driving is performed.

The start device 16 performs the start of the engine 10, and includes a DC/DC converter which boosts a voltage supplied from the battery 18 and a starter motor which performs cranking of the engine 10 by the voltage supplied from the DC/DC converter.

The battery 18 supplies electric power to the starter motor, auxiliary device or the like, and is charged by electric power from an alternator driven by the engine 10. The battery ECU 20 detects a state of the battery 18 and informs the detection result to the ECU 22 via a communication circuit such as a CAN (Controller Area Network). As a state of the battery 18, an internal resistance indicative of a degradation state of the battery 18, a SOC (State Of Charge) indicative of a charging capacity of the battery 18 and the like are included.

As various sensors, an ignition switch 24, a vehicle speed sensor 26, a rotation number sensor 28, an accelerator sensor 30, a water temperature sensor 34, an air conditioner switch 36, a tilt sensor 38, a brake master cylinder oil pressure sensor 40 and the like are provided. The ignition switch 24 is operated to start the engine 10 and when the ignition switch 24 is ON, the start device 16 is operated by the ECU 22 and then the engine 10 has been started. The vehicle speed sensor 26 detects the moving speed of the vehicle and supplies the detection result to the ECU 22. In the embodiment, the vehicle speed sensor 26 configures the means for detecting vehicle speed. The rotation number sensor 28 detects the number of rotations of the engine 10 and supplies the detection result to the ECU 22, and the accelerator sensor 30 detects the amount of operation of the accelerator pedal (an opening degree of the accelerator) and supplies the detection result to the ECU 22. The water temperature sensor 34 detects the water temperature of the engine 10 and supplies the detection result to the ECU 22.

The air conditioner switch 36 operates ON and OFF states of the air conditioner which performs air conditioning in the interior of the vehicle and supplies the detection result to the ECU 22. The tilt sensor 38 detects a tilt value θ indicative of a tilt in a longitudinal direction of the vehicle and supplies the detection result to the ECU 22. For example, the tilt sensor 38 is configured by an acceleration sensor (a G sensor) or the like. In the embodiment, the means for detecting the tilt is configured by the tilt sensor 38. The brake master cylinder oil pressure sensor 40 detects the oil pressure generated in the brake master cylinder according to a stepping force of the brake pedal and supplies the detection result to the ECU 22.

The ECU 22 includes a ROM which receives and stores a control program or the like, a RAM as an operation region of the control program, an interface portion which performs interface with a peripheral circuit or the like. The ECU 22 executes the control program and thereby realizes means for detecting stopping 22A, means for detecting deceleration 22B, means for controlling automatic stopping 22C, means for controlling automatic restart 22D, and means for forced restarting 22E.

The means for detecting stopping 22A detects the stopping state of the vehicle. It is detected by the means for detecting stopping 22A that the vehicle is in a stopped state when the detection result of the vehicle speed sensor 26 is 0, in the embodiment.

The means for detecting deceleration 22B detects a deceleration state of the vehicle. It is detected by the means for detecting deceleration 22B whether the vehicle is in a deceleration state or not based on the detection result of the vehicle speed sensor 26, in the embodiment.

In the means for controlling automatic stopping 22C, the stopping state of the vehicle is detected by the means for detecting stopping 22A. In addition, if it is determined that the stop condition during stopping is established, the automatic stopping process of the engine 10 during stopping is performed. In addition, in the means for controlling automatic stopping 22C, the deceleration state of the vehicle is detected by the means for detecting deceleration 22B and if it is determined that the stop condition during deceleration is established, the automatic stopping process of the engine 10 during deceleration is performed. In other words, if the stop condition during stopping in a stopped state of the vehicle is established, or if stop condition during deceleration in the deceleration state of the vehicle is established, the means for controlling automatic stopping 22C performs the automatic stopping process of the engine 10. As described below, the stop condition during stopping and the stop condition during deceleration include a state of the battery 18, whether or not the air conditioner is operated, the water temperature of the engine 10, the opening degree of the accelerator, the brake master cylinder oil pressure or the like. In addition, as described below, the stop condition during stopping includes that the tilt value θ is smaller than or equal to the determining tilt value θs for stopping state.

When the restart condition of the engine 10 is established during automatic stopping by the means for controlling automatic stopping 22C during stop, the means for controlling automatic restart 22D performs the automatic restart process of the engine 10. As described below, the restart condition includes the state of the battery 18, whether or not the air conditioner is operated, the water temperature of the engine 10, the opening degree of the accelerator, the brake master cylinder oil pressure, or the like.

In the deceleration state of the vehicle, following the performing of the automatic stopping process, the means for forced restarting 22E forcibly performs the automatic restart process of the engine 10 if the tilt value θ is greater than the determining tilt value θc for decelerating state at the time of the stopping state of the vehicle or a low speed state just before stopping. The determining tilt value θc for decelerating state is set to a value smaller than the determining tilt value θs for stopping state. In the embodiment, for example, determining tilt value θc for decelerating state is 5 degrees and the determining tilt value θs for stopping state is 10 degrees.

As shown in Fig. 1, the ECU 22 is provided with five flags as illustrated below. An automatic stop experience flag during stopping FLG1 is set if the automatic stopping process of the engine 10 during stopping is performed by the means for controlling automatic stopping 22C after the ignition switch 24 is turned on ON and then the moving of the vehicle has been started.

Accordingly, the automatic stop experience flag during stopping FLG1 is maintained in a cleared state if the automatic stopping process of the engine 10 during stopping is not performed by the means for controlling automatic stopping 22C after the moving of the vehicle has been started.

An automatic stop experience flag during decelerationFLG2 is set if the automatic stopping process of the engine 10 during deceleration is performed by the means for controlling automatic stopping 22C after the ignition switch 24 is ON and then the moving of the vehicle has been started.

Accordingly, the automatic stop experience flag during decelerationFLG2 is maintained in a cleared state if the automatic stopping process of the engine 10 during stopping is not performed by the means for controlling automatic stopping 22C after the moving of the vehicle has been started.

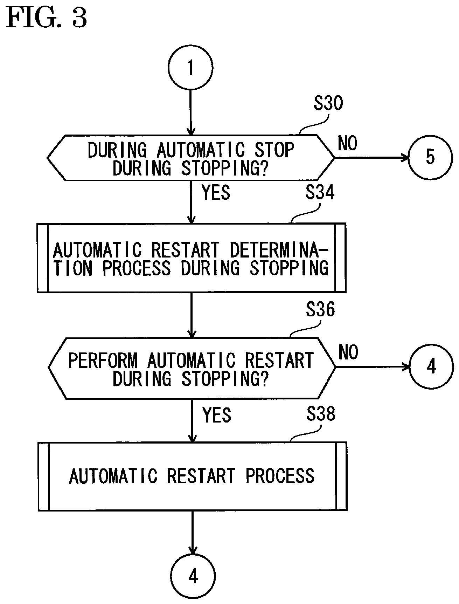

An automatic restart abnormality experience flag FLG3 is set if the automatic restart of the engine 10 cannot be performed by the means for controlling automatic restart 22D due to certain reasons after the ignition switch 24 is ON and then the moving of the vehicle has been started.

Accordingly, the automatic restart abnormality experience flag FLG3 is maintained in a cleared state if the automatic restart is performed normally even though the automatic restart of the engine 10 is not performed by the means for controlling automatic restart 22D after the moving of the vehicle has been started.

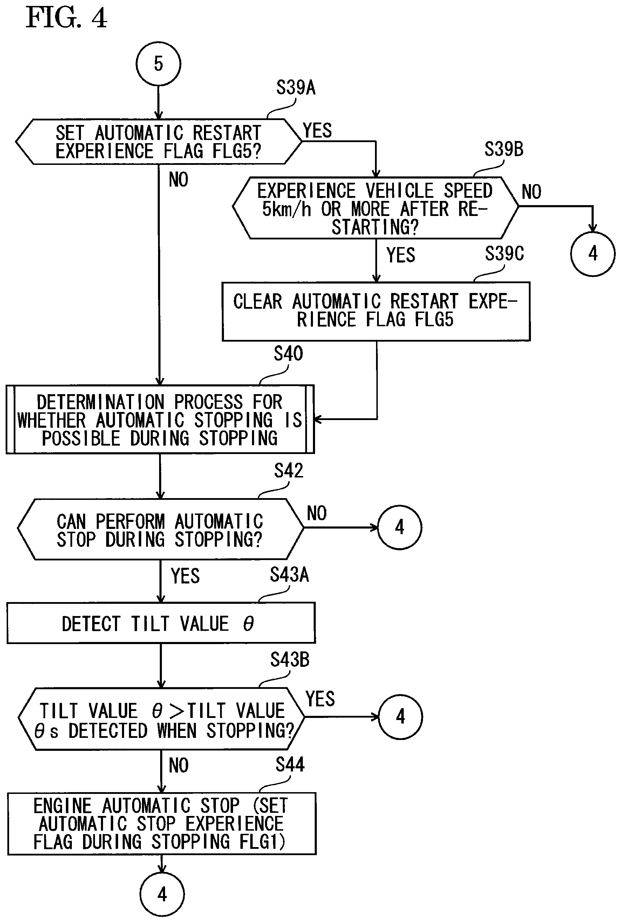

A failure detection experience flag FLG4 is set if a failure is detected in various sensors and various actuators which affect the automatic stopping and the automatic restart of the engine 10 after the ignition switch 24 is turned ON and then the moving of the vehicle has been started. Here, the sensors where the failure may be detected include the ignition switch 24, the vehicle speed sensor 26, the acceleration sensor 30, the water temperature sensor 34, the air conditioner switch 36, the tilt sensor 38, the brake master cylinder oil pressure sensor 40 or the like as described above. The actuator, where the failure should be detected, includes the start device 16.

Accordingly, the failure detection experience flag FLG4 is maintained in the cleared state if the failure is not detected after the moving of the vehicle has been started.

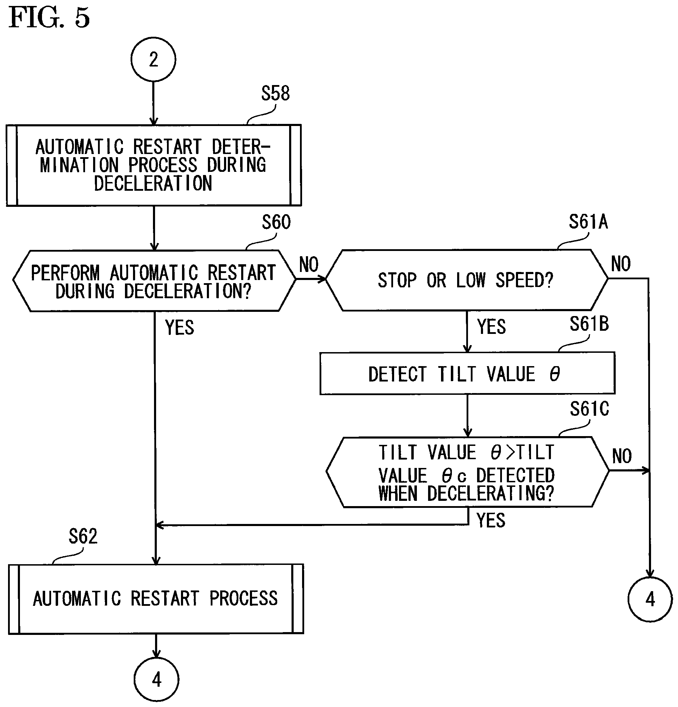

An automatic restart experience flag FLG5 is set if the automatic restart process of the engine 10 is performed normally by the means for controlling automatic restart 22D after the automatic stopping process of the engine 10 is performed by the means for controlling automatic stopping 22C.

Accordingly, the automatic restart experience flag FLG5 is maintained in a cleared state if the automatic restart is performed normally even though the automatic restart of the engine 10 is not performed by the means for controlling automatic restart 22D after the moving of the vehicle has been started.

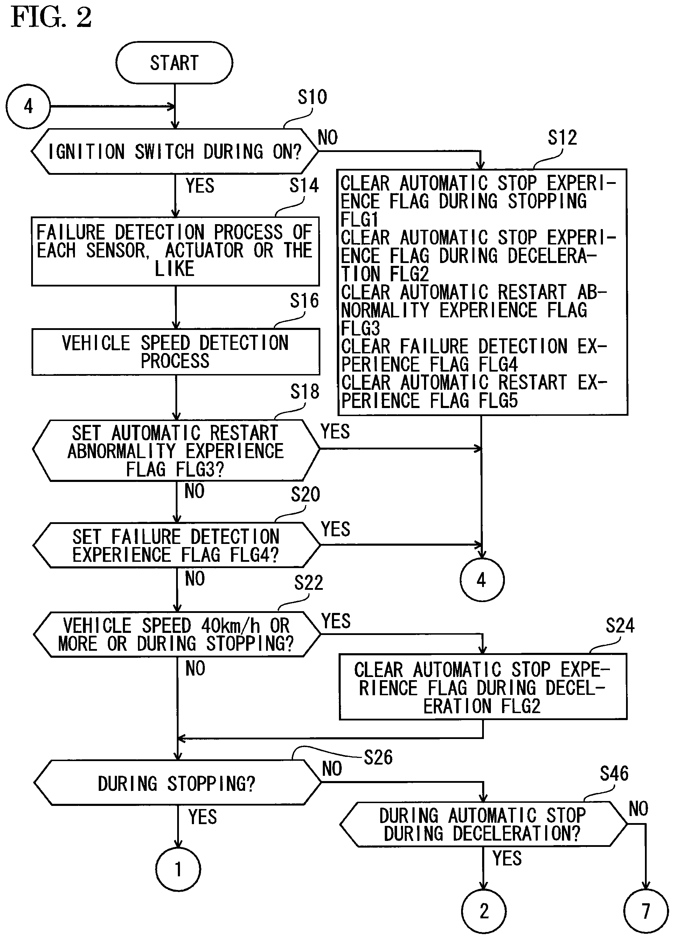

Next, operation of the vehicle control device is described with reference to the flowcharts illustrated in Figs. 2 to 11. First, the ECU 22 determines whether the ignition switch 24 is ON or not (Step S10). If the ignition switch 24 is not ON, all of the automatic stop experience flag during stopping FLG1, the automatic stop experience flag during decelerationFLG2, the automatic restart abnormality experience flag FLG3, the failure detection experience flag FLG4 and the automatic restart experience flag FLG5 are cleared (Step S12) and returns (Step S10). If the ignition switch 24 is ON, the ECU 22 performs the failure detection process of each of sensors and actuators (Step S14). In this case, the ECU 22 maintains clear of the failure detection experience flag FLG4 if the failure is detected, and the failure detection experience flag FLG4 is set if the failure is not detected.

Next, the ECU 22 detects the moving speed V of the vehicle based on the detection result from the vehicle speed sensor 26 (Step S16). Next, the ECU 22 determines whether the automatic restart abnormality experience flag FLG3 is set or not (Step S18). If the automatic restart abnormality experience flag FLG3 is set, a certain abnormality occurs in the automatic restart process of the engine 10 after the moving has been started so that the process below is skipped and returned to Step S10 and then the automatic stopping process of the engine 10 is prohibited. If the automatic restart abnormality experience flag FLG3 is not set, the ECU 22 determines whether the failure detection experience flag FLG4 is set or not (Step S20). If the failure detection experience flag FLG4 is set, failure, which affects the automatic restart process of the engine 10, occurs in the sensor or the actuator so that the process below is skipped and returned to Step S10 and then the automatic stopping process of the engine 10 is prohibited. If the failure detection experience flag FLG4 is not set, the ECU 22 determines whether the moving speed V is greater than or equal to a third reference value V3 or during stopping or not (Step S22). The third reference value V3 may be set to 40km/h.

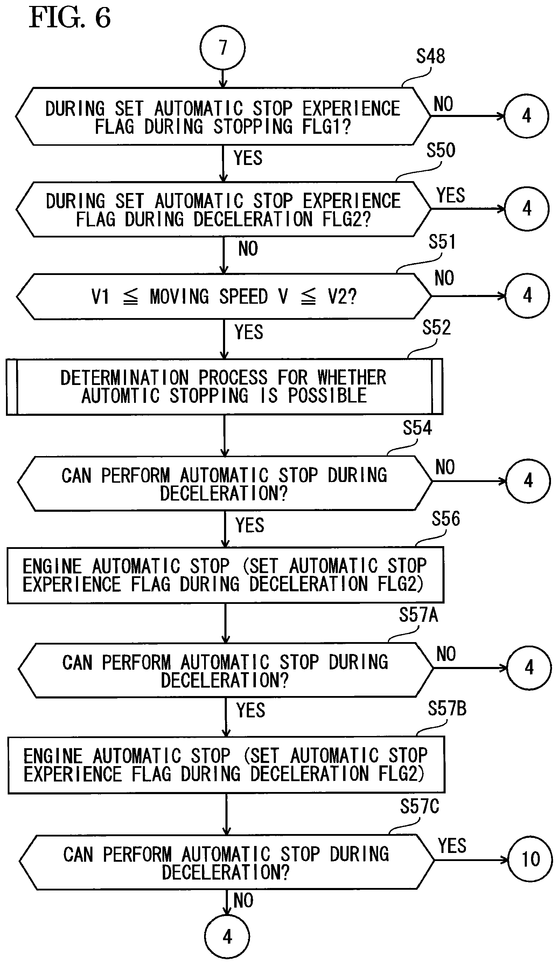

If the moving speed V is greater than or equal to the third reference value V3 or during stopping, the ECU 22 clears the automatic stop experience flag during decelerationFLG2 (Step S24). If the moving speed V is not greater than or equal to the third reference value V3 or is not during stopping, the ECU 22 does not clear the automatic stop experience flag during decelerationFLG2. This is for performing the automatic stopping process of the engine 10 during deceleration, if the moving speed becomes greater than or equal to the third reference value V3 or the vehicle does not experience stopping once after the automatic stopping process of the engine 10 is performed during deceleration. Accordingly, the automatic stopping process during deceleration and the automatic restart process during deceleration being frequently repeated in traffic jams or the like is suppressed. In addition, as shown in Fig. 6 described below, if the automatic stop experience flag during decelerationFLG2 is set, the automatic stopping process of the engine 10 during deceleration is prohibited. If Step S22 is NO, and if Step S24 is performed, the ECU 22 determines whether the vehicle is stopped or not (Step S26: the means for detecting stopping 22A). If the determination result in Step S26 is YES, in other words, if the vehicle is stopped, as shown in Fig. 3, the ECU 22 determines whether the engine 10 is during automatic stopping or not by the automatic stopping process during stopping (Step S30).

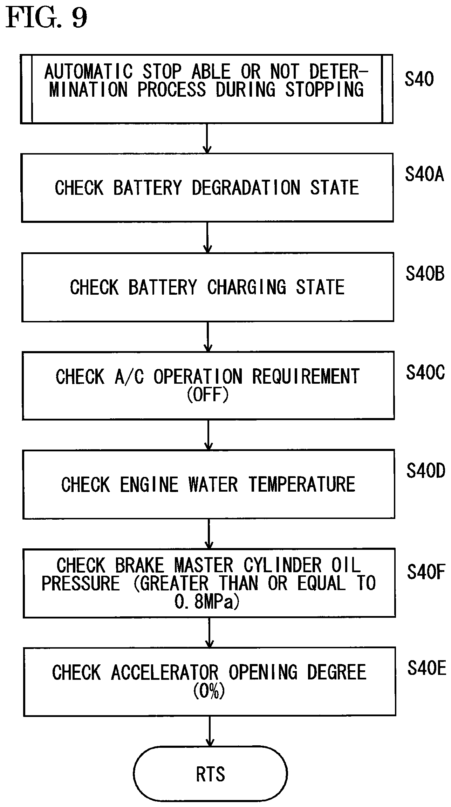

If the determination result in Step S30 is NO, as shown in Fig. 4, the ECU 22 determines whether the automatic restart flag FLG5 is set or not (Step S39A). If the automatic restart flag FLG5 is not set, the ECU 22 performs a determination process for whether automatic stopping is possible during stopping (Step S40). The determination process for whether automatic stopping is possible during stopping determines whether the stop condition during stopping described above is satisfied or not. In other words, the process is performed in order to determine whether the automatic restart process of the engine 10 is performed or not after the automatic stopping process of the engine 10 is performed. The determination process for whether automatic stopping is possible during stopping in Step S40 which is performed by the ECU 22 is illustrated by a subroutine shown in Fig. 9. In other words, the ECU 22 performs a check of a degradation state of the battery 18 (Step S40A). Specifically, it is determined whether the battery 18 is degraded or not, based on whether the detection result of an internal resistance of the battery 18 supplied from the ECU 20 is smaller than the determined reference resistance value (for example, 10mΩ). Next, the ECU 22 performs a check of the charging state of the battery 18 (Step S40B). Specifically, it is determined whether the SOC of the battery supplied from the battery ECU 20 is greater than or equal to the determination reference SOC (for example, 80%). Next, the ECU 22 checks whether an operation requirement of the air conditioner (A/C) is present or not, based on ON and OFF states of the air conditioner switch 36 (Step S40C). Next, the ECU 22 performs a check of the water temperature of the engine 10 supplied from the water temperature sensor 34 (Step S40D). Specifically, it is determined whether the water temperature is greater than or equal to the determination water temperature (for example, 60°C) or not. Next, the ECU 22 performs a check of the oil pressure supplied from the brake master cylinder oil pressure sensor 40 (Step S40F). Specifically, it is determined whether the oil pressure is greater than or equal to 0.8MPa or not. Next, the ECU 22 checks the opening degree of the accelerator (Step S40E). Specifically, it is determined whether the opening degree of the accelerator is 0% or not, based on the amount of operation of the accelerator pedal supplied from the accelerator sensor 30.

The description is continued return to Step S40 in Fig. 4. The ECU 22 determines whether the automatic stopping process of the engine 10 during stopping can be performed (whether the stop condition during stopping is satisfied or not) or not, based on the result in Step S40 (Step S42). Specifically, if all of the check results in Steps S40A to S40F are positive, the determination result in Step S42 is YES and if at least one of the check results in Steps S40A to S40F is negative, the determination result in Step S42 is negative. If the determination result in Step S42 is NO, the ECU 22 skips the process below and returns to Step S10 and then the automatic stopping process of the engine 10 during stop is performed. If the determination result in Step S42 is YES, the ECU 22 detects the tilt value θ obtained from the tilt sensor 38 (Step S43A). Next, the ECU 22 determines whether or not the tilt value θ exceeds the determining tilt value θs for stopping state (Step S43B). If the determination result in Step S43B is YES, in other words, if it is determined that the tilt value θ exceeds the determining tilt value θs for stopping state, the ECU 22 skips the process below and returns to Step S10 and then the automatic stopping process of the engine 10 during stop is performed. If the determination result in Step S43B is NO, in other words, if it is determined that the tilt value θ is smaller than or equal to the determining tilt value θs for stopping state, the ECU 22 performs the automatic stopping process of the engine 10 to stop the engine 10 (Step S44: the means for controlling automatic stopping 22C), and thereby the automatic stop experience flag during stopping FLG1 is set and returns to Step S10.

Specifically, the ECU 22 controls the means for controlling fuel injection 12 or the means for controlling ignition 14 and stops the engine 10. That is, if the process in Steps S43B and S44 is expressed in other words, the means for controlling automatic stopping 22 performs the automatic stopping process of the engine 10 when the stop condition during stopping where the tilt value θ is smaller than or equal to the determining tilt value θs for stopping state in a stopped state of the vehicle.

Further, if the determination result in Step S39A is YES, in other words, if it is determined that the automatic restart flag FLG5 is set, the ECU 22 determines whether the vehicle has experience that the moving speed V is equal to or more than 5km/h or not (Step S39B). If the determination result in Step S39B is NO, the ECU 22 skips the process below and returns to Step S10. If the determination result in Step 39B is YES, the ECU 22 clears the automatic restart flag FLG5 and goes to Step S40 (Step S39C). Accordingly, in a case where the moving speed V has not increased and stayed lower than 5km/h and the vehicle has become the stopping state after the automatic restart process following the automatic stopping process during stopping was performed, the automatic stopping process during stopping is prohibited. Thereby, the frequency of the automatic stopping process and the automatic restart process can be suppressed.

Next, the description is continued for a case where the determination result in Step S26 is NO. If it is NO in Step S26, in other words, if not stopped, the ECU 22 determines whether it is the automatic stop of the engine 10 by the automatic stopping process during deceleration or not (Step S46). If the determination result is NO in Step S46, as shown in Fig. 6, it is determined that the automatic stop experience flag during stopping FLG1 is during set or not (Step S48). If the determination result in Step S48 is NO, since the automatic stopping process during stopping is not even performed once by the ECU 22 from the start of the moving so that the ECU 22 skips the process below and returns to Step S10 and the performing of the automatic stopping process during deceleration is prohibited. If the determination result in Step S48 is YES, the ECU 22 determines whether the automatic stop experience flag during decelerationFLG2 is during set or not (Step S50). If the automatic stop experience flag during decelerationFLG2 is during set, the ECU 22 skips the process below and returns to Step S10 and the performing of the automatic stopping process during deceleration is prohibited. In other words, if the automatic stop experience flag during decelerationFLG2 is not cleared in Step S24 in Fig. 2, the performing of the automatic stopping process during deceleration is prohibited. If the automatic stop experience flag during decelerationFLG2 is not during set, the ECU 22 determines whether the moving speed V is greater than or equal to the first reference value V1 and smaller than or equal to the second reference value V2 or not (Step S51). The first reference value V1 may be set to 5km/h, and the second reference value V2 may be set to 10km/h. If the determination result in Step S51 is NO, the ECU 22 skips the process below and returns to Step S10 and the performing of the automatic stopping process during deceleration is prohibited. If the determination result in Step S51 is YES, the ECU 22 permits the performing of the automatic stopping process during deceleration and performs the determination process for whether automatic stopping is possible during stopping (Step S52). That is, if the process in Step S48 is expressed in other words, when the automatic stop experience condition during stopping, in which the automatic stopping process of the engine 10 during stopping is performed by the means for controlling automatic stopping 22C after the moving of the vehicle has been started and successively, is established, the performing of the automatic stopping process during deceleration of the engine 10 is permitted by the means for controlling automatic stopping 22C. In addition, if the process in Step S50 is expressed in other words, until the moving speed V, which is detected after the automatic stopping process of the engine 10 during deceleration by the means for controlling automatic stopping 22C that is performed in the last time, exceeds the third reference value V3, or until the stopping state of the vehicle is detected, the performing of the automatic stopping process during deceleration of the engine 10 is not permitted by the means for controlling automatic stopping 22C. Here, the determination process for whether automatic stopping is possible during parking in Step S52 determines whether the automatic stop condition during deceleration is satisfied or not. In other words, the process is performed to determine whether the automatic restart process of the engine 10 can be performed or not, after the automatic stop of the engine 10 is performed.

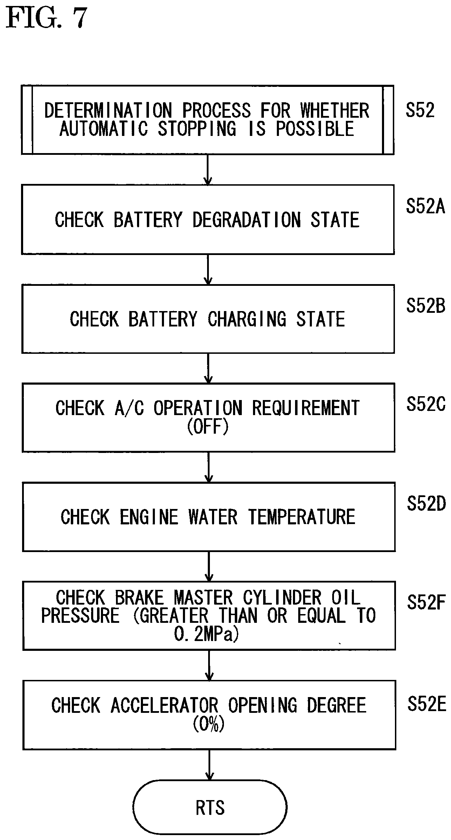

The determination process for whether automatic stopping during deceleration, which the ECU 22 performs in Step S52, is illustrated by the subroutine shown in Fig. 7. In other words, since Steps S52A to S52E in the subroutine are the same as Steps S40A to S40E in Fig. 9, the description thereof is omitted. Step S52F in the subroutine is a check of the oil pressure supplied from the brake master cylinder oil pressure sensor 40 and specifically, it is determined whether the oil pressure is greater than or equal to 0.2MPa or not. Accordingly, in Step S52F, the determination value of the check of the oil pressure is set to a value smaller than the determination value (0.8MPa) in the check of the oil pressure of Step S40F of the determination process for whether automatic stopping is possible during stopping in Fig. 9. This is because the vehicle is during deceleration or moving.

The ECU 22 determines whether the automatic stopping process of the engine 10 during deceleration can be performed or not, in other words, whether the stop condition during deceleration is satisfied or not (Step S54). Specifically, if the entire check result in Step S52A to S52F is YES, the determination result in Step S52 is YES, and if at least one of the check results in Step S52A to S52F is NO, the determination result in Step S52 is NO. If the determination result in Step S54 is NO, the ECU 22 skips the process below and returns to Step S10 and the automatic stopping process during deceleration is not performed. If the determination result in Step S54 is YES, the ECU 22 performs the automatic stopping process of the engine 10 and then the engine 10 is stopped (Step S56: the means for controlling automatic stopping 22C), the automatic stop experience flag during decelerationFLG2 is set and returns to Step S10. Specifically, the ECU 22 controls the means for controlling fuel injection 12 or the means for controlling ignition 14 and thereby the engine 10 is stopped.

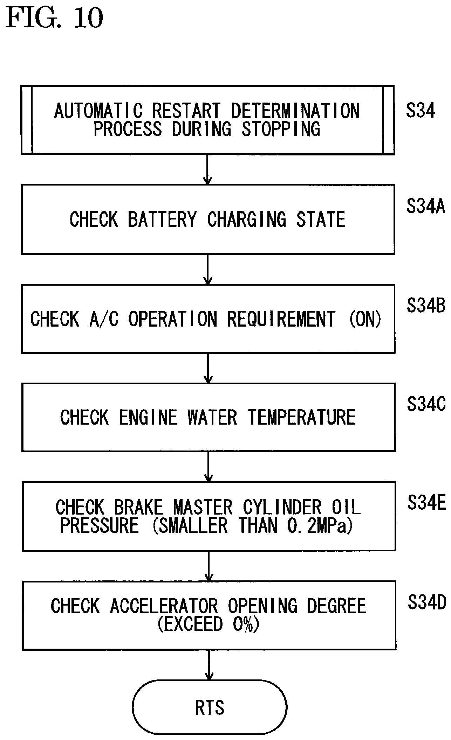

Next, description in a case where the determination result in Step S30 is YES, will be given with reference to Fig. 3. If the determination result in Step S30 is YES, the process of determining whether the automatic restart of the engine 10 during stopping is performed or not is performed (Step S34). The automatic restart determination process which is performed by the ECU 22 in Step S34 is illustrated by the subroutine shown in Fig. 10. In other words, the ECU 22 performs a check of the charging state of the battery 18 (Step S34A). Specifically, it is determined whether the SOC of the battery 18 supplied from the battery ECU 20 is smaller than the determination reference SOC (for example, 80%). Next, the ECU 22 checks whether the operation requirement of the air conditioner (A/C) is present or not, in other words, the air conditioner switch 36 is ON or not, based on ON and OFF states of the air conditioner switch 36 (Step S34B). Next, ECU 22 performs a check of the water temperature of the engine 10 supplied from the water temperature sensor 34 (Step S34C). Specifically, it is determined whether the water temperature is lower than the determined water temperature (for example, 50°C) or not. Next, ECU 22 performs a check of the oil pressure supplied from the brake master cylinder oil pressure sensor 40 (Step S34E). Specifically, it is determined whether the oil pressure is lower than 0.2MPa or not. Next, ECU 22 checks the accelerator opening degree (Step S34D). Specifically, it is determined whether the accelerator opening degree exceeds 0% or not, based on the amount of operation of the accelerator pedal supplied from the accelerator sensor 30.

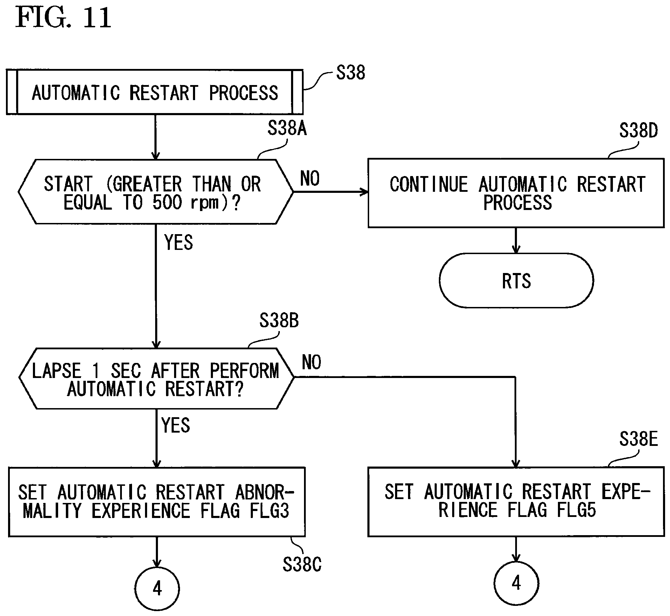

The description is continued again with reference to Fig. 3. The ECU 22 determines whether the automatic restart process of the engine 10 during stopping can be performed or not (whether the automatic restart condition during stopping is satisfied or not), based on the result in Step S34 (Step S36). Specifically, if at least one of the check results in Steps S34A to S34E is YES, the determination result in Step S34 is YES, and if the entire check result in Steps S34A to S34E are NO, the determination result in Step S34 is NO. If the determination result in Step S36 is NO, the ECU 22 skips the process below and returns to Step S10 and the automatic restart process of the engine 10 during stopping is not performed. If the determination result in Step S36 is YES, the ECU 22 controls the means for controlling fuel injection 12 and the means for controlling ignition 14 and thereby the automatic restart process of the engine 10 is performed (Step S38: the means for controlling automatic restart 22D). The automatic restart process of the engine 10, which is performed by the ECU 22 in Step S38, is illustrated by the subroutine shown in Fig. 11.

As shown in Fig. 11, the ECU 22 determines whether the number of rotation N of the engine 10 is more than or equal to a predetermined number of rotation (for example, 500 rpm) based on the detection result of the rotation number sensor 28 after the automatic restart process is performed (Step S38A). If the determination result in Step S38A is NO, the ECU 22 determines to continue the automatic restart process and returns to Step S38 to perform same operation (Step S38D). If the determination result in Step 38A is YES, the ECU 22 determines whether the predetermined time (for example, 1 second) lapses or not until starting of the automatic restart process is accomplished since the ECU 22 performs the automatic restart process, in other words, until the number of rotation reaches the predetermined number of rotation (for example, 500 rpm) (Step S38B). If the determination result in Step 38B is NO, the ECU 22 determines that the starting of the engine 10 is successfully performed and set the automatic restart flag FLG5, then finishes Step S38 and returns to Step S10 (Step S38E). If the determination result in Step S38B is YES, the ECU 22 determines that the starting of the engine 10 is not successfully performed and set the automatic restart abnormality experience flag FLG3, then finishes Step S38 and returns to Step S10 (Step S38C).

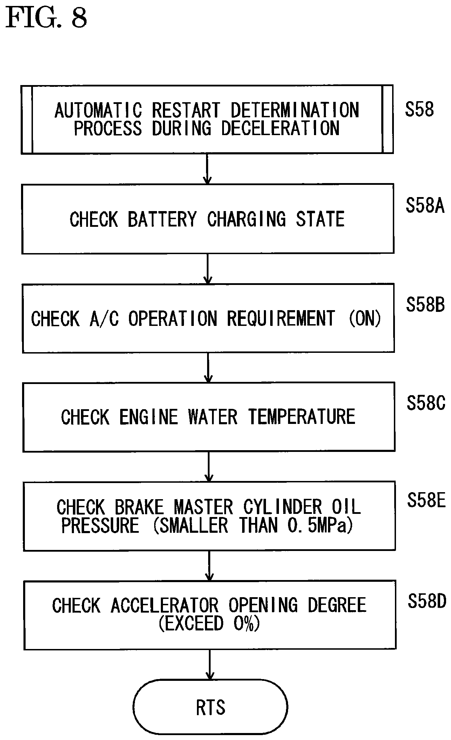

Next, description in a case where the determination result in Step S46 is YES, will be given with reference to Fig. 2. As shown in Fig. 5, if the determination result in Step S46 is YES, the determination process whether the automatic restart process of the engine during deceleration can be performed or not, is performed (Step S58). The automatic restart determination process during deceleration, which is performed by the ECU 22 in Step S58, is illustrated by the subroutine shown in Fig. 8. Since Steps S58A to S58D of Steps S58A to S58E in Fig. 8 are the same as Steps S34A to S34D in Fig. 10, the description thereof is omitted. Step S58E in the subroutine is a check of the oil pressure supplied from the brake master cylinder oil pressure sensor 40, and specifically, it is determined whether the oil pressure is lower than 0.5 MPa or not. Accordingly, in Step S58E, the determination value of check of the oil pressure is set to a value which is smaller than the determination value (0.8MPa) in check of the oil pressure of the determination process for whether automatic stopping is possible during stopping in Step S40F. As described above, the reason that the difference between the determination value of the oil pressure in the automatic stop condition during stopping and the determination value of the oil pressure in the automatic restart condition during deceleration is provided, is because it prevents control hunting in consideration of the error in the determination value of the oil pressure.

The description is continued again with reference to Step S58 in Fig. 5. The ECU 22 determines whether the automatic restart process of the engine 10 during deceleration can be performed or not, in other words, it is determined whether the automatic restart condition during stopping is satisfied or not, based on the result in Step S58 (Step S60). Specifically, if at least one of the check results in Steps S58A to S58D is YES, the determination result in Step S60 is YES, and if the entire check result in Steps S58A to S58D is NO, the determination result in Step S60 is NO. If the determination result in Step S60 is YES, the ECU 22 performs the automatic restart process of the engine 10 by controlling the means for controlling fuel injection 12 and the means for controlling ignition 14 (Step S62: the means for controlling automatic restart 22D). Since the automatic restart process of the engine 10 performed by the ECU 22 in Step S62 is the same as the subroutine (Step S38) shown in Fig. 11 described above, the description thereof is omitted. If the determination result in Step S60 is NO, the ECU 22 determines whether the vehicle is in the stopping state or the low speed state just before stopping based on the detection result of the vehicle speed sensor 26 (Step S61A). In addition, the low speed state means a state where the detection result of the vehicle speed sensor 26 has not become 0 but is assumed just before 0 based on temporal change of the detection result of the vehicle speed sensor 26. If the determination result in Step S61A is NO, the ECU 22 continues the automatic stopping state of the engine 10 and returns to Step S10. If the determination result in Step S61A is YES, the ECU 22 obtains the tilt value θ detected by the tilt sensor 38 (Step S61B). Next, the ECU 22 determines whether the tilt value θ exceeds the determining tilt value θc or not (Step S61C) . If the determination result in Step S57C is YES, in other words, if the ECU 22 determines that the tilt value θ exceeds the determining tilt value θc for decelerating state, the ECU 22 goes to Step S62 described above and forcibly restart the engine 10 (the means for forced restarting 22E). If the determination result in Step S61C is NO, the ECU 22 continues the automatic stopping state of the engine 10 and returns to Step S10.

In other words, in Steps S61A, S61B and S61C, the automatic restart process of the engine 10 is forcibly performed when the ECU 22 determines that the tilt value θ detected by the tilt sensor 38 exceeds the determining tilt value θc for decelerating state at the time that the vehicle becomes the stopping state or the low speed state just before the stopping after the automatic stopping process is performed in the decelerating state of the vehicle. Here, the determining tilt value θc for decelerating state is smaller than the determining tilt value θs for stopping state.

Operational advantage of the vehicle control device of the embodiment is described. Generally, if the automatic stopping process during deceleration is performed, it is considered that the brake stepping pressure (the oil pressure of the brake master cylinder) by the driver is low compared to the brake stepping pressure during stopping. Thus, if the vehicle is in a stopped state or a low speed state just before stopping by the automatic stopping process during deceleration, it cannot be guaranteed that the brake stepping pressure becomes high. Accordingly, if the brake stepping pressure does not generate according to the gradient of the road surface, there is concern that rolling backwards of the vehicle may occur. Thus, in the embodiment, in the decelerating state of the vehicle, following the performing of the automatic stopping process, the automatic restart process is forcibly performed if the tilt value exceeds the determining tilt value θc for decelerating state at the time of the stopping state of the vehicle or a low speed state just before stopping. In other words, if the road surface has a gradient, the automatic stopping process is performed during deceleration under relatively relaxed conditions, however, if a tilt value exceeds the determining tilt value θc for decelerating state in a state where the vehicle is in a stopped state or in a low speed state just before stopping, the restart process is forcibly practiced so that the rolling backwards of the vehicle can be suppressed. Accordingly, there is an advantage of ensuring the frequency of the automatic stopping of the engine 10 during deceleration of the vehicle while reliably suppressing the rolling backwards of the vehicle even if the road surface has a gradient.

In addition, since the automatic stopping process during stopping is performed after the vehicle is stopped, the vehicle stops even though a certain gradient is present, and the rolling backwards of the vehicle hardly occurs even though the engine is automatically stopped. Since the engine 10 is automatically stopped by the automatic stopping process during deceleration before the vehicle stops, it is unclear that whether the stopping of the vehicle can be maintained by the automatic stopping process during deceleration after the vehicle stops. Thus, in the embodiment, in the automatic stopping process during deceleration, when the tilt value θ, which is detected, exceeds the determining tilt value θc for decelerating state, which is smaller than a determining tilt value θs for stopping state as stop condition during stopping, the engine 10 is forcibly started so that the rolling backwards of the vehicle can be prevented in advance. In addition, since the gradient is hard to determine precisely during deceleration, the threshold value (the determining tilt value θc for decelerating state) of the compulsory start is small.

### Reference signs are listed below:

- 2: vehicle control device,
- 10: engine,
- 12: means for controlling fuel injection,
- 14: means for controlling ignition,
- 16: start device,
- 18: battery,
- 20: battery ECU,
- 22: ECU,
- 22A: means for detecting stopping,
- 22B: means for detecting deceleration,
- 22C: means for controlling automatic stopping during deceleration_{,}
- 22D: means for controlling automatic restart,
- 22E: means for forced restarting,
- 24: ignition switch,
- 26: vehicle speed sensor,
- 28: rotation number sensor,
- 30: accelerator sensor,
- 32: brake sensor,
- 34: water temperature sensor,
- 36: air conditioner switch,
- 38: tilt sensor, and
- 40: brake master cylinder oil pressure sensor

## Claims

1. A vehicle control device comprising:
means for controlling automatic stopping, which performs an automatic stopping process of an engine when a stop condition during stopping is established in a stopping state of a vehicle, or when a stop condition during deceleration is established in a decelerating state of the vehicle;
means for controlling automatic restart, which performs an automatic restart process of the engine when a restart condition is established in a state where the engine is in the automatic stopping process;
means for detecting a tilt, which detects a tilt value indicative of a tilt of the vehicle in a longitudinal direction thereof; and
means for forced restarting, which forcibly performs the automatic restart process in a state where the tilt value is greater than a determining tilt value for the decelerating state (θc) when the vehicle is in a stopping state or a low speed state just before the stopping state following the performing of the automatic stopping process, in the decelerating state of the vehicle.

2. The vehicle control device according to claim 1,
wherein the stop condition during stopping includes a condition that the tilt value is smaller than or equal to a determining tilt value for the stopping state (θs), and
the determining tilt value for the decelerating state (θc) is set to a value smaller than the determining tilt value for the stopping state (θs).

## Patentansprüche

1. Fahrzeugsteuerungsvorrichtung, aufweisend:
eine Einrichtung zum Steuern des automatischen Stoppens, die einen automatischen Stoppvorgang eines Motors ausführt, wenn eine Stoppbedingung beim Stoppen in einem Stoppzustand eines Fahrzeugs festgestellt wird oder wenn eine Stoppbedingung beim Abbremsen in einem Abbremszustand eines Fahrzeugs festgestellt wird;
eine Einrichtung zum Steuern eines automatischen Neustarts, die einen automatischen Neustartvorgang eines Motors ausführt, wenn eine Neustartbedingung in einem Zustand festgestellt wird, in dem sich der Motor im automatischen Stoppvorgang befindet;
eine Einrichtung zum Erkennen einer Neigung, die einen Neigungswert erkennt, der eine Neigung des Fahrzeugs in einer Längsrichtung angibt; und
eine Einrichtung zum erzwungenen Neustarten, die den automatischen Neustartvorgang zwangsweise in einem Zustand ausführt, in dem der Neigungswert größer als ein bestimmender Neigungswert für den Abbremszustand (Θc) ist, wenn sich das Fahrzeug in einem Stoppzustand oder in einem Langsamfahrzustand unmittelbar vor dem Stoppzustand befindet, nachdem der automatische Stoppvorgang im Abbremszustand des Fahrzeugs ausgeführt wurde.

2. Fahrzeugsteuerungsvorrichtung nach Anspruch 1,
wobei die Stoppbedingung beim Anhalten eine Bedingung umfasst, dass der Neigungswert gleich oder kleiner als ein bestimmender Neigungswert für den Anhaltezustand (Θs) ist, und der bestimmende Neigungswert für den Abbremszustand (Θc) auf einen kleineren Wert als den bestimmenden Neigungswert für den Anhaltezustand (Θs) eingestellt ist.

## Revendications

1. Dispositif de commande de véhicule comprenant :
un moyen pour commander un arrêt automatique, qui réalise un processus d'arrêt automatique d'un moteur lorsqu'une condition d'arrêt pendant l'arrêt est établie dans un état d'arrêt d'un véhicule, ou lorsqu'une condition d'arrêt pendant la décélération est établie dans un état de décélération du véhicule ;
un moyen pour commander un redémarrage automatique, qui réalise un processus de redémarrage automatique du moteur lorsqu'une condition de redémarrage est établie dans un état où le moteur est dans le processus d'arrêt automatique ;
un moyen pour détecter une inclinaison, qui détecte une valeur d'inclinaison indiquant une inclinaison du véhicule dans une direction longitudinale de celui-ci ; et
un moyen pour un redémarrage forcé, qui force la réalisation du processus de redémarrage automatique dans un état où la valeur d'inclinaison est supérieure à une valeur d'inclinaison déterminante pour l'état de décélération (Θc)
lorsque le véhicule est dans un état d'arrêt ou un état à basse vitesse juste avant l'état d'arrêt à la suite de la réalisation du processus d'arrêt automatique, dans l'état de décélération du véhicule.

2. Dispositif de commande de véhicule selon la revendication 1,
dans lequel la condition d'arrêt pendant l'arrêt comporte une condition selon laquelle la valeur d'inclinaison est inférieure ou égale à une valeur d'inclinaison déterminante pour l'état d'arrêt (Θs), et
la valeur d'inclinaison déterminante pour l'état de décélération (Θc) est réglée sur une valeur inférieure à la valeur d'inclinaison déterminante pour l'état d'arrêt (Θs).
